(19) Europäisches Patentamt
European Patent Office
Office européen des brevets

(11) **EP 1 367 761 B1**

(12) **EUROPEAN PATENT SPECIFICATION**

(45) Date of publication and mention
of the grant of the patent:
**17.01.2007 Bulletin 2007/03**

(51) Int Cl.:
***H04L 1/20*** (2006.01)

(21) Application number: **02253762.5**

(22) Date of filing: **29.05.2002**

(54) **Measurement of jitter in digital communications signals**

Zittermessung in digitale Kommunikationssignale

Mesure de gigue aux signaux de communications numériques

(84) Designated Contracting States:
**DE FR GB**

(43) Date of publication of application:
**03.12.2003 Bulletin 2003/49**

(73) Proprietor: **Agilent Technologies, Inc. - a Delaware corporation -**
**Palo Alto, CA 94303-0870 (US)**

(72) Inventor: **Fisher, John**
**South Queensferry EH30 9PF (GB)**

(74) Representative: **Coker, David Graeme et al**
**Agilent Technologies UK Ltd,**
**Legal Dept,**
**Eskdale Road,**
**Winnersh Triangle**
**Wokingham, Berks RG41 5DZ (GB)**

(56) References cited:
**WO-A2-03/044543**          **US-A- 5 757 652**

- **ITU-T: "The control of jitter and wander within digital networks which are based on the 1544 kbit/s hierarchy " ITU-T RECOMMENDATION G. 824, March 2000 (2000-03), XP002223720 Geneva, CH**
- **ITU-T: "The control of jitter and wander within digital networks which are based on the synchronous digital hierarchy (SDH)" ITU-T RECOMMENDATION G.825, March 2000 (2000-03), XP002223721 Geneva, CH**

## Description

## Technical Field

This invention relates to methods and apparatus for measuring jitter affecting digital signals used for transmitting information in communications networks.

## Background Art

Digital communications networks are continuing to grow relentlessly in extent and capacity, and to become increasingly pervasive in the social and business infrastructure of many countries. Consequently test and measurement equipment for assisting monitoring and management of such networks to avoid interruption of their operation is crucially important.

One key test parameter of a digital communications network and of its component elements is timing jitter, which is defined in publications of the International Telecommunications Union (ITU) as "short-term variations of the significant instances of a digital signal from their ideal positions in time (where short-term implies these variations are of frequency greater than or equal to 10 Hz)". Limits are specified in various international standards (e.g. ITU-T Recommendations G.823, G.824 and G.825) for maximum permissible levels of jitter at interfaces within a digital network. Typically limits are specified in pairs, one for a measurement using a wide-band measurement filter and one using a high-band measurement filter (with a lower cut-off frequency which is above that of the wide-band filter, and with the same minimum upper cut-off frequency). The wide-band filter's lower cut-off frequency is chosen in accordance with the characteristics of timing circuits (e.g. implemented as either phase-locked loops or high-pass filters) which may be incorporated in network equipment. The high-band filter's lower cut-off frequency is related to the bandwidth of input timing acquisition circuitry. The minimum upper cut-off frequency is chosen to reflect reasonable measurement limitations and to include all expected, significant alignment jitter. In practice the required measurement bandwidth is implemented by using a fixed low-pass, wide-band filter for one measurement and switching in a high-pass filter for the other measurement. An additional RMS jitter measurement is performed using a third high pass filter selection.

Network equipment can typically be configured to operate at any one of several different rates of transmission of data symbols (line rates), in a hierarchy of related rates such as those specified in the SONET (Synchronous Optical Network) and SDH (Synchronous Digital Hierarchy) systems. Each line rate has respective pairs of wide-band and high-band measurement bandwidths specified, usually requiring respective high-pass filters which are switched in to enable one or both of the two measurements to be made for a particular line rate. For each line rate there is also a different low pass filter.

For certain purposes measurements at bandwidths additional to those required by the standards may be desirable.

A jitter measurement test usually takes several minutes. Therefore completing measurements for all filter combinations desired for a given line rate can be very time consuming. US 5 757 652 describes an electrical signal jitter and wander measurement system that operates in real time and digitally controls bandwidths over which the measurements are performed. The system includes a phase-lock loop (PLL) containing a phase detector, an analogue-to-digital converter (ADC), a digital signal processor (DSP), a direct digital synthesiser (DDS) and a tracking oscillator. The phase detector signal contains wander and jitter data that are filtered and digitised by the ADC. Wander data are available from the DSP as an integral of the DDS operating frequency, and the DSP performs a loop filter function and high pass filters the wander data to provide subband jitter data. For the purpose of Art 54 (3) EPC, WO 03/044543 is herein cited, which discloses a waveform supplied to a plurality of frequency information extractors for jitter measurement.

## Disclosure of Invention

According to one aspect of this invention there is provided a method of measuring jitter in a digital communications signal, comprising the steps of:

     generating multiple successive samples representative of jitter in a digital communications signal;

characterised by:

     filtering each successive sample with a plurality of respective and different high-pass filter bandwidths in parallel to generate simultaneously a plurality of respective filtered samples;
     adjusting latency for each of the respective filter bandwidths so that the filtering delay for each sample is the same for each filter bandwidth;
     simultaneously measuring the same parameters of the samples filtered with each high-pass filter bandwidth, the parameters comprising jitter peak amplitude and jitter root-mean-square amplitude; and
     selecting parameter measurements and deriving therefrom a measurement of jitter in the communications signal.

According to another aspect of this invention there is provided apparatus for measuring jitter in a digital communications signal, comprising:

     a generator for generating multiple successive samples representative of jitter in a digital communications signal;

characterised by:

a plurality of high-pass filters for receiving the successive samples in parallel to generate a plurality of respective filtered samples simultaneously, each high-pass filter providing a respective and different high-pass filtering bandwidth;

a latency adjustment circuit for adjusting latency for each of the high-pass filters so that the filter delay for each sample is the same for each filter;

a plurality of measurement circuits, each measurement circuit being arranged to receive the filtered samples from a respective high-pass filter, for simultaneous measurement of the same parameters of the filtered samples from each high-pass filter, the parameters comprising jitter peak amplitude and jitter root-mean-square amplitude; and

a selector for selecting parameter measurements provided by the measurement circuits and deriving therefrom a measurement of jitter in the communications signal.

Brief Description of Drawings

A method and apparatus in accordance with this invention, for measuring jitter in a communications signal, will now be described, by way of example, with reference to the accompanying drawings, in which:

Figure 1  is a block schematic diagram of principal components of jitter measurement circuitry;

Figure 2  is a block schematic diagram of filter and measurement functionality implemented in a field programmable gate array (FPGA) forming part of the circuitry of Figure 1; and

Figure 3  is a block schematic diagram of a parallel feedback processing function incorporated in the FPGA of Figure 2.

Best Mode for Carrying Out the Invention, & Industrial Applicability

The circuitry shown in the drawings implements five high-pass filter functions and a parallel, through-path which operate simultaneously so the jitter data in six different measurement bandwidths is available simultaneously. In this particular example the parallel processing capabilities of an FPGA are used to provide digital high-pass filter banks, and also provide low-pass filtering for some line rates. This is advantageous in comparison to analogue filters which typically exhibit some variation in filter characteristic from unit to unit, requiring careful design and setup adjustments to compensate. In addition a large area of circuitry would be required to implement several different bandwidth options using analogue components, leading to a physically bulky and awkward equipment. Furthermore an analogue implementation to provide simultaneous measurement results would require multiple, costly analogue-to-digital converters (ADCs) in parallel and associated peripheral components.

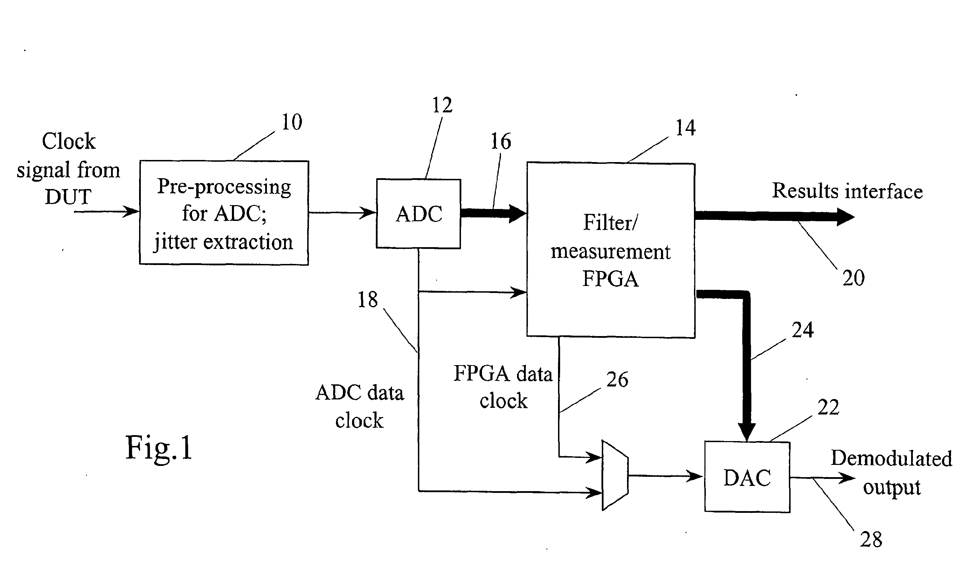

Referring to Figure 1, a clock signal from a device under test (DUT), such as a communications network element, is supplied to a pre-processing circuit 10 which prepares the signal for input to an ADC 12. This pre-processing includes for example phase detection to extract the jitter component of the clock signal, and filtering for anti-aliasing. The ADC 12 samples the input signal at a suitable sample rate, dependent on the jitter measurement bandwidth, and provides 12-bit digitised values of the successive samples to a filter/measurement FPGA 14 via a parallel data bus 16, together with a data clock signal on a line 18. The FPGA 14 filters and measures the samples as described in more detail below, so that the required jitter measurements can be derived and output on a parallel results bus interface 20 for display, further processing etc. Selected samples as filtered by the FPGA 14 are also output to a digital-to-analogue converter (DAC) 22 via a parallel bus 24, together with a clock signal on a line 26, so that a demodulated signal representative of the jitter in the signal from the DUT can be output on a line 28.

As noted above, during a measurement the FPGA implements five parallel high-pass filter functions. The output of each filter and of a through-path is processed by a peak-to-peak measurement module, a root-mean-square (RMS) measurement module and a jitter peak occurrence (hit) counter module within the FPGA. There are one peak-to-peak module, one RMS module and one jitter peak occurrence counter module for each filter/path, all processing data simultaneously. This arrangement provides a significant time saving by making all required measurements for a given line rate with one instrument set-up. It also offers the advantage of providing RMS measurements for all bandwidth selections, for no extra set-up overhead.

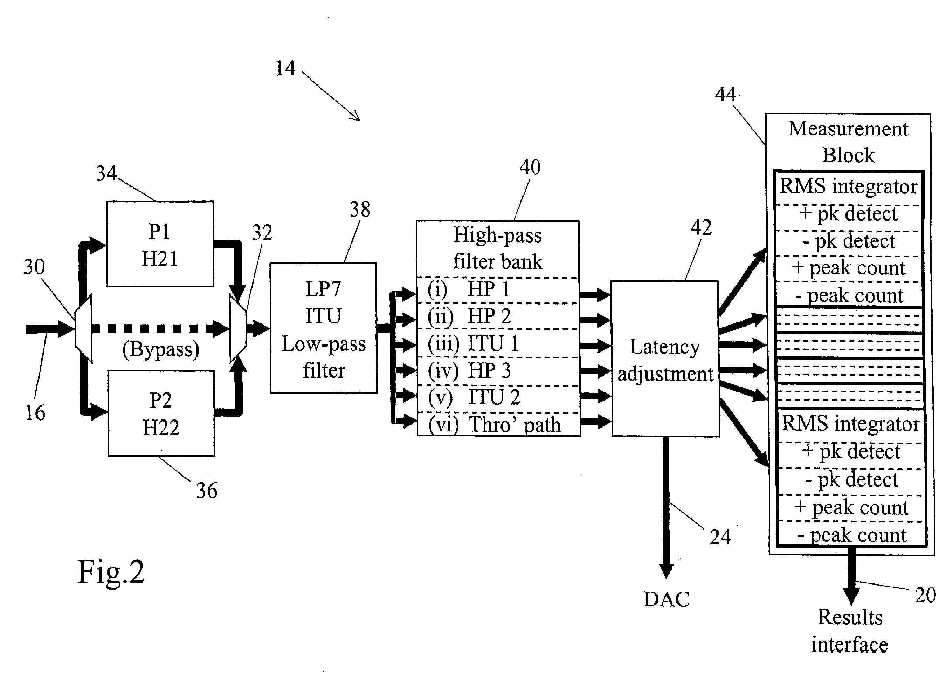

Referring to Figure 2, the sample values output by the ADC on the data bus 16 are fed to a first of a pair of selectors 30 and 32 for selecting either of two post-emphasis filters 34 and 36 with filter characteristics H21 and H22 respectively, which compensate for clock recovery frequency response effects. The selectors 30 and 32 can also feed the received data samples directly from one to the other, to bypass the post-emphasis filtering.

The data samples emerging from the selector 32 are passed through a filter 38, implementing the low-pass filtering function required by the ITU Recommendations, to a bank 40 of digital high-pass filter functions. This bank comprises five filter functions 40(i) to 40(v) together with a through path 40(vi). The filter functions 40(iii) and 40(v) implement the high-band measurement bandwidths required by the ITU Recommendations for the line rate being tested. The functions 40(i), 40(ii) and 40(iv) provide a third bandwidth for RMS jitter measurements and two further bandwidths which are considered to be useful to provide additional versatility in a jitter test environment. As indicated by the parallel arrows entering the bank 40, the data samples from the filter 38 are supplied to all the filter functions 40(i) to 40(vi) simultaneously.

The outputs from the high-pass filter functions and the through path are connected to a latency adjustment circuit 42, to ensure that the filter delay for a given sample is the same for each path and the parallel measurements are therefore simultaneous, and from there to a measurement block 44. The measurement block 44 implements six sets of measurement functions, each set comprising an RMS integrator, positive peak detector, negative peak detector, positive peak occurrence counter and negative peak occurrence counter. Each of these six sets of measurement functions is coupled to a respective high-pass filter function or the through path in the bank 40 via a respective path through the latency adjustment circuit 42, so that data processing for the measurement functions implemented in the block 44 proceeds for all six filter functions in the bank 40 simultaneously. The measurement block 44 accumulates measurement information over a succession of measurement intervals, and the results of the data processing at the end of each measurement interval are supplied by the measurement block 44 via the results interface 20 to an instrument processor for reporting of the required jitter measurements in conventional manner.

All the results collected during one measurement interval are available for display while the measurement results for the following interval are being accumulated. At the option of the user the jitter measurements for one, several or all of the high-pass filter functions 40 may be displayed simultaneously. Changes in display choices can be performed without any delay for gathering of the related measurements.

Data are supplied to the DAC 22 (Figure 1) via the bus 24 from the circuit 42, which connects one of the outputs from the high-pass filter bank 40 to the bus 24 in accordance with a user selection.

In order to fit all the required data processing functionality into a commercially-available FPGA, separate FPGA configurations are used for each line rate, i.e. the FPGA is re-programmed from associated memory (not shown) each time a different line rate is selected by the user. Thus the FPGA only needs enough programmable array capacity to accommodate the measurement functionality for one line rate. In practice the functionality for more than one of the lower line rates may be lumped together in one FPGA configuration.

The digital filter implementations used for the high-pass filter functions 40 incorporate relatively wide (32-bit) data words to provide filter roll-off accuracy and measurement resolution. The filters are implemented as recursive infinite impulse response (IIR) filters to minimize the requirement for FPGA capacity. Three particular practical issues are addressed by this implementation of the filters:

-   The data rate required to sample the full jitter measurement bandwidth accurately (e.g. 204 MSPs) is very fast, such that, in conjunction with the 32-bit wide data words, the fastest available FPGA could not perform the feedback operation required (32 x 32 bit, fixed coefficient multiplication) for an IIR filter within one sample period.

-   Some of the high-pass filters have very low cut-off frequencies in relation to the data sampling rate, such that they could almost be considered as DC stops. However, the relevant jitter measurement standards require that the filters provide a 1st order Butterworth roll-off characteristic, and that the cut-off frequency meets a specified tolerance, so a simple DC stop filter could not be used. The coefficient values comprising the definition of the digital filter functions therefore have to be very accurate.

-   In selecting multiplier coefficients for a digital filter, it is advantageous to be able to select a data sample rate that is related to the coefficients so as to reduce the coefficient multiplication operations to single and dual bit operations. More complex multiplication operations would require extra FPGA capacity, and would reduce the maximum speed at which the FPGA can perform the coefficient multiplication operations. In implementing a bank of filters operating simultaneously a data rate is selected to suit all the filters.

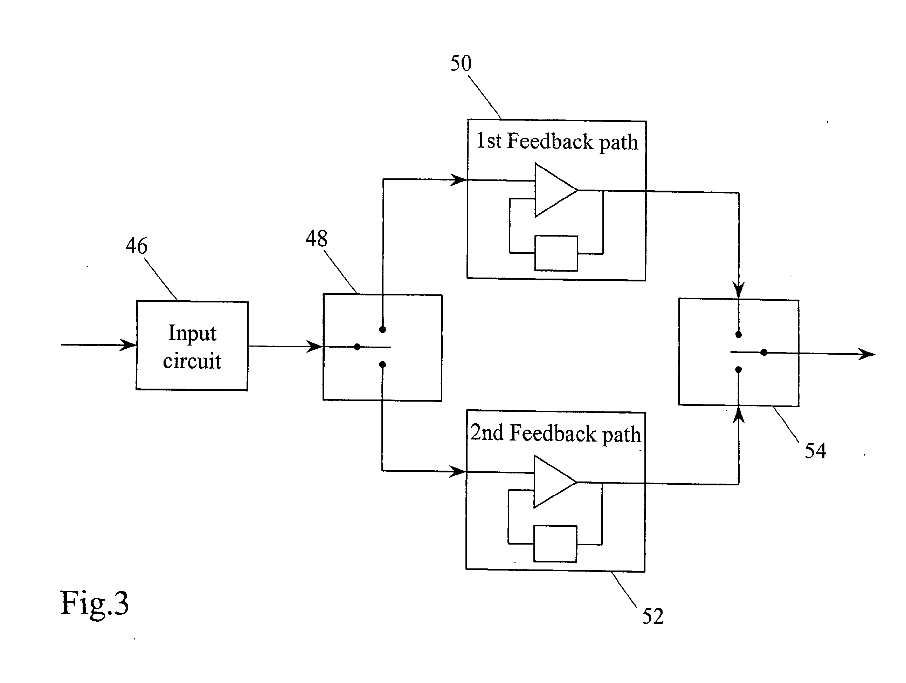

To address speed limitation of the FPGA device, a parallel pipeline process was used to "unwrap" the IIR feedback stage and allow it to be performed over two or more sample periods. This allowed the FPGA to perform the feedback function at half the data rate, effectively doubling the maximum data rate for the FPGA. The principles of the modified IIR feedback stage are illustrated in Figure 3. Referring to Figure 3, the input data for the feedback stage are supplied to an input circuit 46 which is coupled to a first commutator 48 which switches repetitively between two states at the sample data rate. In a first state the received data are fed through a first feedback path 50, implementing the required IIR feedback operation. In the commutator's second state the data are fed to a second feedback path 52, implementing the same feedback function. The outputs of the two feedback paths 50 and 52 are coupled to a second commutator 54 operating synchronously with the first commutator 48.

Thus two samples are processed in parallel, allowing two clock cycles in which to perform the complete IIR feedback operation for each sample. The unmodified IIR feedback path performs the following operation:

$$X(n) = u(n) - k\ X(n\text{-}1)$$

where X(n) is the output of the feedback path for the *n*th sample;
u(n) is the input to the feedback path for the nth sample;

and

*k* is a constant feedback factor.

Considered over two sample periods this becomes:

$$X(n) = u(n) - ku(n-1) + k^2X(n-2)$$

This summation is split into two sections:

$$X(n) = Y(n) + k^2X(n-2)$$

$$Y(n) = u(n) - ku(n-1)$$

The Y(n) summation is performed in the input stage 46 and can be done at full rate as it is a feed forward circuit and can be pipelined. The X(n) summation is accomplished over two sample periods, using the two multiplexed parallel feedback paths 50 and 52.

The term $k^2$ is implemented as a fixed coefficient. Some approximation occurs owing to quantization of the $k^2$ term. However, the feedback loop only operates every two samples, reducing the accumulation of such error. This reduction in error accumulation has a more dominant effect on the accuracy of the filter response than the approximation error.

To derive the filter coefficient values and the multiplier coefficients, a set of mathematical software modelling programs are used to design and analyse a bank of high pass filters over a range of possible data sample rates. The programs also analyse the filters at each data rate to identify the number of summation operations required to create a 'sum of bit-shifted inputs' implementation of the coefficient multiplier. Some sample frequencies could only be used if the coefficients are implemented using a large number of summations, so these frequencies are preferably avoided. The results of this modelling are inspected to identify a sample frequency that offers optimum accuracy, whilst allowing the simplest coefficients (least number of bits) to be used.

Once a candidate sample frequency has been chosen, the filter designs are simulated using a true fixed point simulator. The simulation results data are used as the FPGA test vectors.

The jitter measurement circuitry described above enables jitter measurement equipment to make multiple, simultaneous jitter measurements at different measurement bandwidths of a communications signal at a selected line rate, thereby effecting a substantial saving in time over previous sequential measurement approaches.

## Claims

1. A method of measuring jitter in a digital communications signal, comprising the steps of :

   generating (12) multiple successive samples representative of jitter in a digital communications signal;
   filtering each successive sample with a plurality of respective and different high-pass filter bandwidths (40(i)-40(v)) in parallel simultaneously to generate a plurality of respective filtered samples;
   adjusting latency (42) for each of the respective filter bandwidths so that the filtering delay for each sample is the same for each filter bandwidth;
   simultaneously measuring (44) the same parameters of the samples filtered with each high-pass filter bandwidth (40(i)-40(v)), the parameters comprising jitter peak amplitude and jitter root-mean-square amplitude; and
   selecting parameter measurements (20) and deriving therefrom a measurement of jitter in the communications signal.

2. The method of claim 1, wherein the measured parameters include a count of jitter peak occurrences over a predetermined time interval.

3. The method of claim 2, wherein the measured parameters include a count of jitter positive and negative peak occurrences over the predetermined time interval.

4. The method of any of the preceding claims, wherein the measured parameters include positive and negative jitter peak amplitudes.

5. The method of claim 1, wherein all measurements of jitter for a plurality of the high-pass filter bandwidths (40(i)-40(v)) are available for display simultaneously.

6. The method of any of the preceding claims, wherein each successive sample that is filtered with the high-pass filter bandwidths (40(i)-40(v)) is also supplied to a through path (40(vi)) in parallel with the high-pass filtering (40(i)-40(v)), and the parameters of the samples from the through path are measured (44).

7. Apparatus for measuring jitter in a digital communications signal, comprising:

   a generator (12) for generating multiple successive samples representative of jitter in a digital communications signal;
   a plurality of high-pass filters (40(i)-40(v)) for receiving the successive samples in parallel simultaneously to generate a plurality of respective filtered samples each high-pass filter (40(i)-40(v)) providing a respective and different high-pass filtering bandwidth;

a latency adjustment circuit (42) for adjusting latency for each of the high-pass filters so that the filter delay for each sample is the same for each filter;

a plurality of measurement circuits (44), each measurement circuit being arranged to receive the filtered samples from a respective high-pass filter (40(i)-40(v)), for simultaneous measurement of the same parameters of the filtered samples from each high-pass filter (40(i)-40(v)), the parameters comprising jitter peak amplitude and jitter root-mean-square amplitude; and

a selector (20) for selecting parameter measurements provided by the measurement circuits (44) and deriving therefrom a measurement of jitter in the communications signal.

**Patentansprüche**

1. Ein Verfahren zum Messen von Jitter in einem digitalen Kommunikationssignal, das folgende Schritte umfasst:

Erzeugen (12) von mehreren aufeinander folgenden Abtastwerten, die Jitter in einem digitalen Kommunikationssignal darstellen;

paralleles Filtern jedes aufeinander folgenden Abtastwerts mit einer Mehrzahl von jeweiligen und unterschiedlichen Hochpassfilterbandbreiten (40(i) - 40(v)), um gleichzeitig eine Mehrzahl von jeweiligen gefilterten Abtastwerten zu erzeugen;

Einstellen einer Latenzzeit (42) für jede der jeweiligen Filterbandbreiten, so dass die Filterverzögerung für jeden Abtastwert für jede Filterbandbreite gleich ist;

gleichzeitiges Messen (44) der gleichen Parameter der Abtastwerte, die mit jeder Hochpassfilterbandbreite (40(i) - 40(v)) gefiltert wurden, wobei die Parameter Jitterspitzenamplitude und Jitter-Effektivwert-Amplitude umfassen; und

Auswählen von Parametermessungen (20) und Ableiten einer Jittermessung in dem Kommunikationssignal von denselben.

2. Das Verfahren gemäß Anspruch 1, bei dem die gemessenen Parameter einen Zählwert von Jitterspitzenvorkommen über ein vorbestimmtes Zeitintervall umfassen.

3. Das Verfahren gemäß Anspruch 2, bei dem die gemessenen Parameter einen Zählwert von positiven und negativen Jitterspitzenvorkommen über das vorbestimmte Zeitintervall umfassen.

4. Das Verfahren gemäß einem der vorhergehenden Ansprüche, bei dem die gemessenen Parameter positive und negative Jitterspitzenamplituden umfassen.

5. Das Verfahren gemäß Anspruch 1, bei dem alle Messungen von Jitter für eine Mehrzahl der Hochpassfilterbandbreiten (40(i) - 40(v)) gleichzeitig für eine Anzeige verfügbar sind.

6. Das Verfahren gemäß einem der vorhergehenden Ansprüche, bei dem jeder aufeinander folgende Abtastwert, der mit den Hochpassfilterbandbreiten (40(i) - 40(v)) gefiltert wird, parallel mit dem Hochpassfiltern (40(i) - 40(v)) auch an einen Durchgangsweg (40(v)--40(i)) geliefert wird, und die Parameter der Abtastwerte von dem Durchgangsweg gemessen werden (44).

7. Vorrichtung zum Messen von Jitter in einem digitalen Kommunikationssignal, die folgende Merkmale umfasst:

einen Generator (12) zum Erzeugen mehrerer aufeinander folgender Abtastwerte, die Jitter in einem digitalen Kommunikationssignal darstellen;

eine Mehrzahl von Hochpassfiltern (40(i) - 40(v)) zum parallelen Empfangen der aufeinander folgenden Abtastwerte, um gleichzeitig eine Mehrzahl von jeweiligen gefilterten Abtastwerten zu erzeugen; wobei jedes Hochpassfilter (40(i) - 40(v)) eine jeweilige und unterschiedliche Hochpassfilterbandbreite liefert;

eine Latenzzeiteinstellschaltung (42) zum Einstellen der Latenzzeit für jeden der Hochpassfilter, so dass die Filterverzögerung für jeden Abtastwert für jedes Filter gleich ist;

eine Mehrzahl von Messschaltungen (44), wobei jede Messschaltung angeordnet ist, um die gefilterten Abtastwerte von einem jeweiligen Hochpassfilter (40(i) - 40(v)) zu empfangen, für eine gleichzeitige Messung der gleichen Parameter der gefilterten Abtastwerte von jedem Hochpassfilter (40(i) - 40(v)), wobei die Parameter Jitterspitzenamplitude und Jitter-Effektivwert-Amplitude umfassen; und

einen Selektor (20) zum Auswählen von Parametermessungen, die durch die Messschaltungen (44) geliefert werden, und Ableiten einer Messung von Jitter in dem Kommunikationssignal von denselben.

## Revendications

1. Procédé de mesure de la gigue d'un signal de communication numérique, comprenant les étapes consistant à :

   générer (12) plusieurs échantillons successifs représentatifs de la gigue dans un signal de communication numérique ;
   filtrer chaque échantillon successif avec une pluralité de bandes passantes de filtres passe-haut respectives et différentes (40(i)-40(v)) en parallèle, simultanément, pour générer une pluralité d'échantillons filtrés respectifs ;
   ajuster la latence (42) pour chacune des bandes passantes de filtre respectives, de manière à ce que le délai de filtrage pour chaque échantillon soit le même pour chaque bande passante de filtre ;
   mesurer simultanément (44) les mêmes paramètres des échantillons filtrés avec chaque bande passante de filtre passe-haut (40(i)-40(v)), les paramètres comprenant l'amplitude maximale de la gigue et l'amplitude quadratique moyenne de la gigue ; et
   sélectionner des mesures de paramètre (20) et dériver de celles-ci une mesure de la gigue dans le signal de communication.

2. Procédé selon la revendication 1, dans lequel les paramètres mesurés comprennent un compte des occurrences des pics de gigue pendant un intervalle de temps prédéterminé.

3. Procédé selon la revendication 2, dans lequel les paramètres mesurés comprennent un compte des occurrences des pics de gigue positive et négative pendant l'intervalle de temps prédéterminé.

4. Procédé selon l'une quelconque des revendications précédentes, dans lequel les paramètres mesurés comprennent des amplitudes maximales de gigue positive et négative.

5. Procédé selon la revendication 1, dans lequel toutes les mesures de gigue pour une pluralité de bandes passantes de filtre passe-haut (40(i)-40(v)) sont disponibles pour être affichées simultanément.

6. Procédé selon l'une quelconque des revendications précédentes, dans lequel chaque échantillon successif qui est filtré avec les bandes passantes de filtre passe-haut (40(i)-40(v)) est également délivré à un chemin direct (40(vi)) en parallèle avec le filtrage passe-haut (40(i)-40(v)), et les paramètres des échantillons provenant du chemin direct sont mesurés (44).

7. Appareil pour mesurer la gigue dans un signal de communication numérique, comprenant :

   un générateur (12) pour générer plusieurs échantillons successifs représentatifs de la gigue dans un signal de communication numérique ;
   une pluralité de filtres passe-haut (40(i)-40(v)) pour recevoir les échantillons successifs en parallèle, simultanément, pour générer une pluralité d'échantillons filtrés respectifs, chaque filtre passe-haut (40(i)-40(v)) présentant une bande passante de filtrage passe-haut respective et différente ;
   un circuit d'ajustement de latence (42) pour ajuster la latence pour chacun des filtres passe-haut de manière à ce que le délai du filtre pour chaque échantillon soit le même pour chaque filtre ;
   une pluralité de circuits de mesure (44), chaque circuit de mesure étant arrangé pour recevoir les échantillons filtrés d'un filtre passe-haut respectif (40 (i) -40 (v) ), pour une mesure simultanée des mêmes paramètres des échantillons filtrés provenant de chaque filtre passe-haut (40(i)-40(v)), les paramètres comprenant l'amplitude maximale de la gigue et l'amplitude quadratique moyenne de la gigue ; et
   un sélecteur (20) pour sélectionner des mesures de paramètre fournies par les circuits de mesure (44) et dériver de celles-ci une mesure de la gigue dans le signal de communication.

Fig.1

Clock signal from DUT → Pre-processing for ADC; jitter extraction (10) → ADC (12) → Filter/ measurement FPGA (14) → Results interface (20)

16

ADC data clock (18)

FPGA data clock (26)

DAC (22) → Demodulated output (28)

24

Fig.2

Fig.3